(19) Europäisches Patentamt
European Patent Office
Office européen des brevets

(11) Veröffentlichungsnummer: **0 159 656**
**B1**

(12) **EUROPÄISCHE PATENTSCHRIFT**

(45) Veröffentlichungstag der Patentschrift: **03.08.88**

(51) Int. Cl.⁴: **C 07 F 9/30**

(21) Anmeldenummer: **85104608.6**

(22) Anmeldetag: **16.04.85**

(54) **Verfahren zur Herstellung der Alkali- und Erdalkali-Salze von Diarylphosphinsäuren.**

(30) Priorität: **21.04.84 DE 3415070**

(43) Veröffentlichungstag der Anmeldung: **30.10.85 Patentblatt 85/44**

(45) Bekanntmachung des Hinweises auf die Patenterteilung: **03.08.88 Patentblatt 88/31**

(84) Benannte Vertragsstaaten: **BE CH DE FR GB IT LI NL**

(56) Entgegenhaltungen:
**DE - B - 1 044 813**

**Hollemann Wiberg, ISBN 3-11-007511-3, Seite 939, Absatz 2**

(73) Patentinhaber: **HOECHST AKTIENGESELLSCHAFT, Postfach 80 03 20, D-6230 Frankfurt am Main 80 (DE)**

(72) Erfinder: **Kleiner, Hans-Jerg, Dr.-Ing., Altkönigstrasse 11a, D-6242 Kronberg/Taunus (DE)**

**EP 0 159 656 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Diarylphosphinsäuren sind Verbindungen der allgemeinen Formel

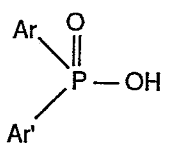

worin Ar und Ar′ = gleiche oder verschiedene aromatische Reste;
sie sind hauptsächlich Zwischenprodukte auf verschiedenen Sachgebieten wie etwa dem Pharma- und Pflanzenschutzsektor.

Ihre Alkali- und Erdalkalisalze – aus denen die freien Diarylphosphinsäuren auf übliche Weise (z.B. durch Zugabe von Salzsäure) gewonnen werden können – werden beispielsweise nach dem in der DE-C 1 044 813 beschriebenen Verfahren hergestellt durch Zusammenschmelzen von Triarylphosphanoxiden oder von Diaryl-aralkylphosphanoxiden mit Alkali- oder Erdalkalihydroxiden bei Temperaturen im Bereich von etwa 210–360°C. Der Umsetzung liegen folgende Reaktionsgleichungen zugrunde (die Gleichungen werden hier formuliert mit NaOH als Alkalihydroxid und $Ca(OH)_2$ als Erdalkalihydroxid):

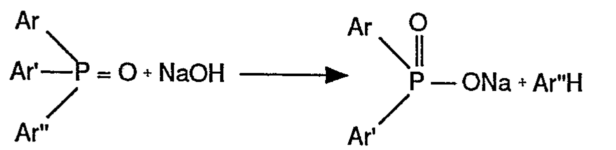

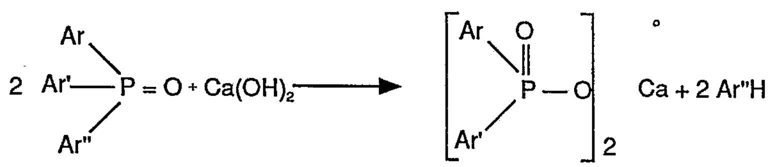

In den Formeln bedeuten Ar und Ar′ wieder gleiche oder verschiedene aromatische Reste, und Ar″ = aromatischer oder Aralkylrest.

Von den drei organischen Resten des Ausgangs-Phosphanoxids wird hier derjenige bevorzugt abgespalten, der als Anion die grösste Resonanzstabilisierung besitzt – also etwa der Benzyl- vor dem Phenylrest; vgl. Spalte 3, Zeilen 27 bis 30 der vorerwähnten DE-C.

Nach der Stöchiometrie der Umsetzung wird – wie aus den Reaktionsgleichungen ersichtlich ist – pro Mol Ausgangs-Phosphanoxid ein Mol Alkalihydroxid oder ein halbes Mol Erdalkalihydroxid benötigt. In der vorerwähnten DE-C wird jedoch die Verwendung von überschüssigem Alkali- oder Erdalkalihydroxid als «zweckmässig» beschrieben. In allen Beispielen der DE-C – mit einer Ausnahme – wurde auch mit z.T. erheblichen Überschüssen an Alkali- oder Erdalkalihydroxid gearbeitet. Lediglich in einem Beispiel (Beispiel 5b) wurde die stöchiometrische (äquimolare) Menge an Alkalihydroxid eingesetzt; das Phosphanoxid-Ausgangsprodukt für dieses Beispiel war aber kein Triarylphosphinoxid, sondern ein Diaryl-aralkyl-phosphanoxid, nämlich das Diphenylbenzylphosphanoxid. Wegen der leichteren Abspaltbarkeit des Benzylrestes (gegenüber dem Phenylrest) gelingt die Abspaltung hier offenbar bereits ohne überschüssiges Alkalihydroxid in befriedigendem Ausmass. Dafür ist aber das in diesem Beispiel verwendete Ausgangsprodukt (Diphenylbenzylphosphanoxid) weniger einfach zugänglich als die Triarylphosphanoxide, insbesondere diejenigen mit drei gleichen Arylresten.

Für die Umsetzung der Triarylphosphanoxide mit (gegenüber der Stöchiometrie) Überschüssen an Alkali- oder Erdalkalihydroxiden ist – ausser der offensichtlichen Notwendigkeit des Einsatzes dieser Hydroxid-Überschüsse – noch nachteilig, dass die nach dem Verfahren erhaltenen Salze der Diarylphosphinsäuren unter den Reaktionsbedingungen Feststoffe sind und dass deshalb bei technischen Ansätzen erhebliche Wärmeübergangsprobleme entstehen.

Ein weiterer Nachteil ergibt sich bei der Aufarbeitung des Reaktionsansatzes. Nach dem Erkalten wird die Schmelze zunächst in Wasser gelöst. Wegen des überschüssigen Alkali- oder Erdalkalihydroxids ist die Lösung dann stark alkalisch. Die Gewinnung der reinen Phosphinsäure-Alkali- oder Erdalkali-salze aus dieser stark alkalischen Lösung ist nur mit beträchtlichem Aufwand – z.B. durch sorgfältige fraktionierte Kristallisation – möglich.

Wenn andererseits aus der stark alkalischen Lösung nicht die Phosphinsäuresalze, sondern die freie Diarylphosphinsäure gewonnen werden soll, ist die Lösung mit einer erheblichen Menge einer starken Säure wie z.B. Salzsäure zwecks Neutralisation zu versetzen. Dadurch wird die Diarylphosphinsäure in Freiheit gesetzt; nach der auf übliche Weise erfolgten Isolierung soll die Ausbeute zwischen 80 und 100% d.Th. liegen. Die erheblichen Salzmengen müssen dann nach oft ziemlich aufwendigen Verfahren in umweltschonender Weise aufgearbeitet werden.

Die der Umsetzung von Triarylphosphanoxiden mit überschüssigen Alkali- oder Erdalkalihydroxiden in der Schmelze anhaftenden Nachteile

können – wie eigene Versuche ergeben haben – auch nicht einfach dadurch behoben werden, dass man die Umsetzung nur mit stöchiometrischen Mengen an Alkali- oder Erdalkalihydroxiden durchführt. Dabei werden nämlich in einigermassen vernünftigen Reaktionszeiten (bis etwa 8 Stunden) nur unbefriedigende Ausbeuten (bis etwa 70% d.Th) an den entsprechenden Alkalioder Erdalkalisalzen erhalten.

In dem Bestreben, die aus der DE-C 1 044 813 bekannte Reaktion so zu verbessern, dass die der Reaktion anhaftenden Nachteile nicht mehr auftreten, wurde nun gefunden, dass dieses Ziel durch Umsetzung von Triarylphosphanoxiden mit den stöchiometrischen Mengen an Alkali- oder Erdalkalihydroxiden in Gegenwart von Wasser unter Überdruck erreicht wird.

Erfindungsgegenstand ist daher ein Verfahren zur Herstellung der Alkali- und Erdalkalisalze von Diarylphosphinsäuren durch Umsetzung von Triarylphosphanoxiden mit Alkali- oder Erdalkalihydroxiden bei erhöhter Temperatur, das dadurch gekenzeichnet ist, dass man die Umsetzung bei einem Molverhältnis von Triarylphosphanoxid zu Alkali- oder Erdalkalihydroxid von etwa 1 : 1 bzw. 0,5 in Gegenwart von zugegebenem Wasser unter Überdruck durchführt.

Bei dieser Verfahrensweise werden in nicht zu langen Reaktionszeiten hohe – meist quantitative oder nahezu quantitative – Ausbeuten an den entsprechenden Phosphinsäuresalzen erreicht. Da keine Überschüsse an Alkali- oder Erdalkalihydroxid erforderlich sind, treten die mit dem Einsatz der überschüssigen Hydroxide gemäss dem Verfahren der DE-C 1 044 813 verbundenen Nachteile hier nicht auf. Wegen der Gegenwart von Wasser während der Umsetzung ist die Reaktion leichter durchführbar; insbesondere ist der Einsatz wässriger Alkali- und Erdalkalihydroxidlösungen möglich. Da keine Überschüsse an Alkali- oder Erdalkalihydroxiden verwendet werden, ist der Reaktionsansatz dann auch leichter aufarbeitbar; wenn man die freien Diarylphosphinsäuren gewinnen will, entstehen insbesondere nicht die für das Verfahren der DE-C 1 044 813 nachteiligen erheblichen Salzmengen.

Das Gelingen der Reaktion in der erfindungsgemässen Weise mit den stöchiometrischen Mengen an Alkali- oder Erdalkalihydroxiden war ausserordentlich überraschend, weil man nach den eigenen Versuchen aufgrund des ungünstigen Resultats der Umsetzung von Triarylphosphanoxiden mit stöchiometrischen Mengen an Alkali- oder Erdalkalihydroxiden in der Schmelze entsprechend dem Verfahren der DE-C 1 044 813 ohne eine wesentliche Erhöhung der Alkali- oder Erdalkalihydroxidmenge kaum mehr mit einem verbesserten Ergebnis rechnen konnte. Offenbar ist für das trotzdem erzielte günstige Resultat die Gegenwart von Wasser und die Durchführung der Reaktion unter Überdruck verantwortlich.

Als für das Verfahren geeignete Ausgangs-Triarylphosphanoxide kommen Verbindungen sowohl mit gleichen als auch mit ungleichen Arylresten, welche ihrerseits sowohl substituiert als auch unsubstituiert sein können, in Frage. Wenn die Arylreste substituiert sind, sollen natürlich die Substituenten im Reaktionsmedium und unter den Reaktionsbedingungen inert sein; d.h. sie sollen nicht in unerwünschter Weise reagieren. Beispielhafte Arylreste sind der Phenyl- und der Naphthylrest, beispielhafte inerte Substituenten Alkylgruppen, Alkoxygruppen, Amino-, Alkylamino- und Dialkylaminogruppen, wobei als Alkylgruppen solche mit bis zu 4 C-Atomen bevorzugt sind. Bevorzugte Triarylphosphanoxide sind solche mit 3 gleichen Arylgruppen, insbesondere Triphenylphosphanoxid.

Die Triarylphosphanoxide sind in bekannter Weise erhältlich – z.B. durch Behandeln von quartären Phosphoniumsalzen mit Alkali oder durch Oxidation von tertiären Phosphinen oder auch durch Umsetzung von Phosphorsäurechloriden mit Grignard-Reagentien – und sind z.T. auch Handelsprodukte. Triphenylphosphanoxid fällt auch z.T. in erheblichen Mengen als Nebenprodukt bei technischen Synthesen wie z.B. der «Wittig-Reaktion» (= Reaktion von Aldehyden oder Ketonen mit Triphenylphosphan-alkylenen, insbesondere mit Triphenylphosphanmethylen) an.

Als Alkali- und Erdalkali-hydroxide können praktisch sämtliche Hydroxide der Alkali (Li, Na, K, Rb, Cs)- und Erdalkali (Be, Mg, Ca, Sr, Ba)-Metalle verwendet weden. Bevorzugt ist der Einsatz von NaOH, KOH und $Ba(OH)_2$.

Die Alkali- und Erdalkalihydroxide werden in etwa stöchiometrischen Mengen eingesetzt, d.h. in einem Molverhältnis von Triarylphosphanoxid zu Alkalihydroxid von etwa 1:1
bzw. von Triarylphosphanoxid zu Erdalkalihydroxid von etwa 1:0,5. Die Reaktion verläuft zwar im Prinzip auch mit überschüssigem Alkali- oder Erdalkalihydroxid, doch werden die Vorteile der erfindungsgemässen Arbeitsweise (mit etwa stöchiometrischem Molverhältnis) dadurch verringert.

Die Wassermenge, welche bei der erfindungsgemässen Umsetzung zugegen sein soll, kann im Prinzip innerhalb erheblicher Grenzen schwanken. Bevorzugt ist jedoch eine Wassermenge von etwa 10 bis 100 Gew.%, insbesondere von etwa 20 bis 60 Gew.%, bezogen auf das Gewicht des eingesetzten Triarylphosphanoxids. Der Einsatz wässriger Alkali- und Erdalkalihydroxid-Lösungen ist dadurch möglich.

Die Reaktion wird bei Überdruck durchgeführt, vorzugsweise im geschlossenen System unter autogenem (Über-)Druck.

Die Reaktionstemperatur liegt in der Grössenordnung der auch für das Verfahren gemäss DE-C 1 044 813 beschriebenen Temperaturen. Der allgemein gängige Temperaturbereich liegt zwischen etwa 160 und 350°C, vorzugsweise zwischen etwa 200 und 280°C.

Es kann zweckmässig sein, die Umsetzung unter Inertgasatmosphäre durchzuführen, wobei als Inertgase z.B. Stickstoff oder Argon in Frage kommen.

Die Reaktionsdauer kann innerhalb relativ weiter Grenzen – normalerweise zwischen etwa 1 und 30 Stunden – schwanken; im allgemeinen werden hohe Ausbeuten aber bereits in etwa 5 bis 10 Stunden erzielt.

Sowohl die kontinuierliche als auch die diskontinuierliche Arbeitsweise ist möglich.

Zur Durchführung der Umsetzung werden das Triarylphosphanoxid, das Alkali- oder Erdalkalihydroxid und die entsprechende Menge Wasser in einem Druckbehälter auf die gewünschte Reaktionstemperatur erhitzt und etwa 1 oder mehrere Stunden bei dieser Temperatur belassen. Nach beendeter Umsetzung wird das Druckgefäss geöffnet und gegebenenfalls noch weiteres Wasser hinzugegeben. Es bilden sich im allgemeinen dann zwei Schichten. Die obere Schicht besteht aus aromatischem Kohlenwassestoff – im Falle der Verwendung des bevorzugten Ausgangsproduktes Triphenylphosphanoxid aus Benzol – die untere aus einer wässrigen, praktisch neutralen Lösung des Alkali- oder Erdalkalisalzes der Diarylphosphinsäure, die gegebenenfalls noch kleinere Mengen aromatischen Kohlenwasserstoffs enthält. Nach der Phasentrennung werden die Alkali- oder Erdalkalisalze der entsprechenden Diarylphosphinsäure aus der wässrigen Phase z.B. durch Abdestillation des Wassers oder Massnahmen der Sprühtrocknung schliesslich in meist praktisch quantitativer Ausbeute und hoher Reinheit erhalten. Die Salze können gewünschtenfalls auf bekannte Weise in andere Salze oder auch in die jeweilige freie Diarylphosphinsäure überführt werden.

Wenn die freie Diarylphosphinsäure angestrebt wird, kann der nach Ablauf der erfindungsgemässen Umsetzung erhaltene Reaktionsansatz auch gleich – vorteilhaft in Gegenwart eines die Diarylphosphinsäure bei etwa 100°C gut lösenden organischen Lösungsmittel wie z.B. Chlorbenzol – mit einer starken anorganischen Säure wie z.B. mit Salzsäure versetzt werden. Dabei wird die sich bildende freie Diarylphosphinsäure zusammen mit dem im Reaktionsansatz vorhandenen aromatischen Kohlenwasserstoff in dem organischen Lösungsmittel bei etwa 100°C gelöst. Nach Abtrennung der wässrigen Schicht und gegebenenfalls Filtration der organischen Schicht fällt aus letzterer beim Abkühlen die Diarylphosphinsäure kristallin aus.

Die Erfindung wird nun durch die nachfolgenden Beispiele näher erläutert. Nach den (Erfindungs-)Beispielen folgt noch ein Vergleichsbeispiel, welches zeigt, dass die Umsetzung von Triphenylphosphanoxid mit einer äquimolaren Menge Alkalihydroxid in der Schmelze gemäss dem Verfahren der DE-C 1 044 813 nach etwa 8 Stunden nur eine unbefriedigende Ausbeute (etwa 70% d.Th.) an Diphenylphosphinsäuresalz ergibt. Gegen Ende der etwa 8stündigen Reaktion war der Reaktionsverlauf bereits so langsam – erkenntlich an der nurmehr ausserordentlich langsamen Abspaltung von Benzol – dass gegebenenfalls für eine geringfügige Ausbeuteverbesserung noch eine unverhältnismässig längere Reaktionsdauer erforderlich gewesen wäre.

Beispiel 1

278 g (= 1 Mol) Triphenylphospanoxid, 40 g (= 1 Mol) Natriumhydroxid und 110 g Wasser wurden in einen 1-Liter-Nickel-Schüttelautoklaven gefüllt. Dann wurde mit Stickstoff gespült. Nun wurde innerhalb 3 Stunden auf 285°C geheizt. Dabei stieg der Druck auf 83 bar. Es wurde weitere 7 Stunden bei dieser Temperatur gehalten. Nun wurde gekühlt. Der Reaktionsansatz wurde mit 600 ml Wasser versetzt. Die obere Benzol-Schicht wurde abgetrennt. Die untere wässrige Schicht enthielt das Natriumsalz der Diphenylphosphinsäure. Diese Lösung wurde in eine Mischung von 500 ml konz. Salzsäure und 300 ml Wasser unter lebhaftem Rühren einfliessen gelassen, wobei sich die Diphenylphosphinsäure abschied. Nach dem Absaugen und Trocknen wurden 216 g erhalten, die aufgrund eines $^{31}$P-NMR-Spektrums frei von phosphororganischen Verunreinigungen waren. Das entspricht einer Ausbeute von 99% d.Th.

Beispiel 2

278 g (= 1 Mol) Triphenylphosphanoxid, 56 g (= 1 Mol) Kaliumhydroxid und 110 g Wasser wurden in einen 1-Liter-Nickel-Schüttelautoklaven gefüllt. Dann wurde mit Stickstoff gespült. Nun wurde innerhalb 2,5 Stunden auf 280°C geheizt. Dabei stieg der Druck auf 70 bar. Es wurde weitere 4 Stunden bei 285–290°C gehalten. Der Druck stieg dabei auf 72 bar. Nun wurde gekühlt. Die obere (Benzol-) Schicht des Reaktionsansatzes wurde abgetrennt. Die resultierende neutrale wässrige Lösung der Kaliumsalzes der Diphenylphosphinsäure wurde im Wasserstrahlvakuum eingeengt. Man erhielt nach der Trocknung 250 g des Kaliumsalzes der Diphenylphosphinsäure. Das entspricht einer Ausbeute von 98% d.Th.

Beispiel 3

278 g (= 1 Mol) Triphenylphosphanoxid, 160 g (= 0,5 Mol) Bariumhydroxid-8-hydrat und 100 g Wasser wurden in einen 1-Liter-Nickel-Schüttelautoklaven gefüllt. Dann wurde mit Stickstoff gespült. Nun wurde 10 Stunden bei 285°C gehalten. Der Druck stieg dabei auf maximal 80 bar. Das nach Abkühlen resultierende neutrale Reaktionsgemisch, das das Bariumsalz der Diphenylphosphinsäure enthielt, wurde mit 400 ml Wasser, 500 ml konz. Salzsäure und 2 Liter Chlorbenzol versetzt und mehrere Stunden bei 95°C gerührt. Dann wurde die Chlorbenzolschicht heiss abgetrennt, heiss filtriert und abgekühlt. Nach dem Absaugen und Trocknen erhielt man 175 g Diphenylphosphinsäure. Das entspricht einer Ausbeute von 80% d.Th.

Beispiel 4

278 g (= 1 Mol) Triphenylphosphanoxid, 40 g (= 1 Mol) Natriumhydroxid und 110 g Wasser

wurden in einen 1-Liter-Nickel-Schüttelautoklaven gefüllt. Dann wurde mit Stickstoff gespült. Nun wurde auf 200°C geheizt. Nach etwa 30 Std. wurde bei einem Druck von 20 bar die Reaktion beendet. Nach Abkühlung wurde der Reaktionsansatz mit ca. 800 ml Wasser versetzt. Bei 45°C wurde nun die obere Benzolschicht abgetrennt. Die untere wässrige Schicht wurde mit ca. 1 Liter Wasser weiter verdünnt und dann bei etwa 0°C gerührt. Dabei fielen 36 g Triphenylphosphanoxid (= 0,13 Mol) aus, die abgesaugt wurden. Nun wurde die wässrige Lösung eingeengt und zu 500 ml konz. Salzsäure unter lebhaftem Rühren einfliessen gelassen, wobei sich die Diphenylphosphinsäure abschied. Nach dem Absaugen und Trocknen wurden 185 g erhalten. Das entspricht bei einem 87%igen Umsatz einer Ausbeute von ca. 97,5% d.Th.

Vergleichsbeispiel

278 g (= 1 Mol) Triphenylphosphanoxid und 40 g (= 1 Mol) fein gepulvertes Natriumhydroxid wurden gemischt und unter Rühren erhitzt. Bei 160°C stellte die Mischung eine leicht rührbare Schmelze dar. Ab 205°C begann Benzol abzudestillieren, das in einer Vorlage aufgefangen wurde. Weiterhin befand sich hinter der Vorlage eine Kühlfalle. Nun wurde unter weiterem ständigem Rühren die Temperatur erhöht unter gleichzeitiger weiterer Abdestillation des Benzols. Nach 30 Minuten wurde eine Innentemperatur von 250°C erreicht. Zu diesem Zeitpunkt war das Reaktionsgemisch bereits teilweise insbesondere an den Wänden des Reaktionskolbens unrührbar kristallinisch fest geworden. Nach weiteren 2 Stunden war eine Innentemperatur von 290°C erreicht. Der Kolbeninhalt war unrührbar fest geworden. Der Rührer wurde deshalb abgestellt, um Rührerbruch zu vermeiden. Nach insgesamt 6,5 Stunden hatten sich 52 g Benzol in der Vorlage gesammelt. Nach einer weiteren Stunde hatten sich bei weiterhin 290°C Innentemperatur nur noch 1 g in der Vorlage gesammelt. Die nachgeschaltete Kühlfalle war leer. Insgesamt hatten sich nach 7 Stunden (davon 5 Stunden bei 290°C) 53 g Benzol gebildet. Das entspricht einer Ausbeute von 68% d.Th. Nun wurde abgekühlt und mit 400 ml Wasser versetzt. Nach längerem Rühren bei 50°C bildete sich eine klare wässrige Lösung, die in eine Mischung von 500 ml konz. Salzsäure und 500 ml Wasser unter lebhaftem Rühren und unter Kühlung einfliessen gelassen wurde. Nach mehreren Stunden Rühren wurde abgesaugt und mit Wasser nachgespült. Es wurden nach Trocknung 230 g erhalten, die aufgrund des $^{31}$P-NMR-Spektrums zu 28% aus Triphenylphosphanoxid und 72% aus Diphenylphosphinsäure bestanden.

## Patentansprüche

1. Verfahren zur Herstellung der Alkali- und Erdalkalisalze von Diarylphosphinsäuren durch Umsetzung von Triarylphosphanoxiden mit Alkali- oder Erdalkalihydroxiden bei erhöhter Temperatur, dadurch gekennzeichnet, dass man die Umsetzung bei einem Molverhältnis von Triarylphosphanoxid zu Alkali- oder Erdalkalihydroxid von etwa 1:1 bzw. 0,5 in Gegenwart von zugegebenem Wasser unter Überdruck durchführt.

2. Verfahren nach Anspruch 1, dadurch gekennzeichnet, dass man als Triarylphosphanoxid Triphenylphosphanoxid verwendet.

3. Verfahren nach den Ansprüchen 1 oder 2, dadurch gekennzeichnet, dass man als Alkalihydroxide Natrium- und Kaliumhydroxid, und als Erdalkalihydroxid Bariumhydroxid verwendet.

4. Verfahren nach einem oder mehreren der Ansprüche 1 bis 3, dadurch gekennzeichnet, dass man die Reaktion in Gegenwart einer Wassermenge von etwa 10 bis 100 Gew.%, vorzugsweise von etwa 20 bis 60 Gew.%, bezogen auf das Gewicht des Ausgangs-Triarylphosphanoxids, durchführt.

5. Verfahren nach einem oder mehreren der Ansprüche 1 bis 4, dadurch gekennzeichnet, dass man die Umsetzung unter autogenem Druck durchführt.

6. Verfahren nach einem oder mehreren der Ansprüche 1 bis 5, dadurch gekennzeichnet, dass man die Umsetzung bei Temperaturen zwischen etwa 160 und 350°C, vorzugsweise zwischen etwa 200 und 280°C, durchführt.

## Claims

1. A process for the preparation of alkali and alkaline earth metal salts of diarylphosphinic acids by reacting triarylphosphane oxides with alkali or alkaline earth metal hydroxides at elevated temperature, characterized in that the reaction is carried out using a molar ratio of a triarylphosphane oxide to an alkali or alkaline earth metal hydroxide of about 1:1 or 0.5 respectively, in the presence of added water, under elevated pressure.

2. The process as claimed in claim 1, characterized in that triphenylphosphane oxide is used as the triarylphosphane oxide.

3. The process as claimed in claim 1 or 2, characterized in that sodium hydroxide or potassium hydroxide is used as the alkali hydroxide, and barium hydroxide is used as the alkaline earth metal hydroxide.

4. The process as claimed in one or more of claims 1 to 3, characterized in that the reaction is carried out in the presence of an amount of water of about 10 to 100% by weight, preferably of about 20 to 60% by weight, relative to the weight of the starting triarylphosphane oxide.

5. The process as claimed in one or more of claims 1 to 4, characterized in that the reaction is carried out under autogenous pressure.

6. The process as claimed in one or more of claims 1 to 5, characterized in that the reaction is carried out at temperatures between 160 and 350°C, preferably between about 200 and 280°C.

**Revendications**

1. Procédé pour préparer des sels alcalins et de métaux alcalino-terreux d'acides diarylphosphoniques par réaction d'oxydes de triaryl-phosphines avec des hydroxydes alcalins ou de métaux alcalino-terreux, à température élevée, procédé caractérisé en ce qu'on effectue la réaction avec un rapport molaire de l'oxyde de triarylphosphine à l'hydroxyde alcalin ou à l'hydroxyde de métal alcalino-terreux étal respectivement à environ 1:1 ou à environ 1:0,5, en présence d'eau ajoutée et sous pression.

2. Procédé selon la revendication 1 caractérisé en ce qu'on utilise l'oxyde de triphényl-phosphine comme oxyde de triaryl-phosphine.

3. Procédé selon l'une des revendications 1 et 2, caractérisé en ce qu'on utilise, comme hydroxydes alcalins, l'hydroxyde de sodium et l'hydroxyde de potassium, et, comme hydroxyde de métal alcalino-terreux, l'hydroxyde de barryum.

4. Procédé selon l'une quelconque des revendications 1 à 3, caractérisé en ce qu'on effectue la réaction en présence d'une quantité d'eau d'environ 10 à 100% en poids, de préférence d'environ 20 à 6% en poids, par rapport au poids de l'oxide de triaryl-phosphine de départ.

5. Procédé selon l'une quelconque des revendications 1 à 4, caractérisé en ce qu'on effectue la réaction sous la pression autogène.

6. Procédé selon l'une quelconque des revendications 1 à 5, caractérisé en ce qu'on effectue la réaction à des températures comprises entre environ 160 et 350°C, de préférence entre environ 200 et 280°C.